# EUROPEAN PATENT SPECIFICATION

(11) **EP 1 911 427 B1**
(45) Date of publication and mention of the grant of the patent: **02.09.2015**
(21) Application number: 06781652.0
(22) Date of filing: 26.07.2006
(51) Int. Cl.: A61G 5/04, B62B 3/00

(54) **TRAVELING CONTROLLER OF SMALL ELECTRIC VEHICLE**
FAHRTREGLER VON EINEM KLEINEN ELEKTRISCHEN FAHRZEUG
DISPOSITIF DE COMMANDE MOBILE D`UN PETIT VÉHICULE ÉLECTRIQUE

(30) Priority: 05.08.2005 JP 2005227583
(43) Date of publication of application: 16.04.2008
(73) Proprietor: Yamaha Hatsudoki Kabushiki Kaisha, Iwata-shi, Shizuoka 438-8501 (JP)
(72) Inventor: MATSUNAE, Toru, Iwata-shi, Shizuoka 438-8501 (JP)
(74) Representative: Grünecker Patent- und Rechtsanwälte PartG mbB
(86) International application number: PCT/JP2006/314740
(87) International publication number: WO 2007/018034

(56) References cited:
- EP-A1- 0 687 454
- JP-A- 08 168 506
- JP-A- 09 002 371
- JP-A- 09 296 829
- JP-A- 2002 095 114
- JP-A- 2003 134 611
- US-A- 4 961 473
- US-A- 5 394 968

## Description

### Technical Field

The present invention relates to a traveling control device for an electrically operated small vehicle, for example, an electrically operated wheelchair. More specifically, it relates to a traveling control device, in which, if the vehicle includes a mechanical clutch mechanism, a connection operation of the clutch mechanism can be automatically, facilely, and certainly made.

### Background Art

EP0687454 describes a vehicle according to the preamble of claim 1.

For example, an electrically operated wheelchair generally includes a mechanical clutch mechanism for connecting or disconnecting transmission of driving force in a driving force transmission system for transmitting driving force from an electric motor to a traveling wheel. Among this type of a conventional clutch mechanism is a dog type clutch mechanism, in which a ring gear of a planetary gear mechanism for decelerating rotations of the electric motor is constructed rotatably relative to a frame, also grooves are formed on an outer periphery of the ring gear at a prescribed pitch, and a pin engaging in or out the grooves are reciprocally disposed on the frame. In this dog clutch mechanism, if a clutch lever is pivoted to the disconnection side, engagement between the pin and the groove is released, and transmission of rotational force of the planetary gear mechanism is disconnected. If the clutch lever is pivoted to the connection side, the pin engages in the groove, and thereby the planetary gear mechanism decelerates rotations of the motor and transmits rotational force to the traveling wheel.

### Patent Document 1

JP-B-Hei 7-53169

### Disclosure of the Invention

### Problem to be Solved by the Invention

However, in the vehicle including the conventional dog clutch mechanism, in case that the pin is positioned between the grooves when a driver pivots the clutch lever to the connection side, there is a problem that the pin does not engage in the groove, and the clutch is not connected. In such a case, it is necessary to change a relative position of the pin to the grooves by rotating the wheel from the outside. Therefore, in the conventional wheelchair, a driver has to shake the whole vehicle with his body or rotate the wheel by his hands to engage the pin in the groove after the clutch lever is pivoted to the connection side. However, there is a problem that such an action is difficult for disabled users in many cases and a helping attendant is needed for the action.

The present invention is made in consideration of the conventional circumstance, and the object is to provide a traveling control device for an electrically operated small vehicle, in which a clutch connection can be facilely, certainly and automatically made.

### Means for Solving the Problem

The problem is solved by a vehicle according to claim 1 and using a method according to claim 6. Further specific embodiments according to the invention are described in dependant claims 2 to 5.

### Effect of the Invention

In the traveling control device for an electrically operated small vehicle according to the invention of claim 1, if a driver provides an input rotation command value via the inputting means, the connection or disconnection state of the clutch mechanisms are detected by the clutch detecting means, and output rotation command values to the electric motors are controlled by the motor controlling means corresponding to the detected connection or disconnection state of the clutch mechanisms. Therefore, rotation of the electric motor can be controlled in a manner such that the clutch mechanism certainly becomes the connection state.

In the invention, in case that an input rotation command value is input from the inputting means when the clutch mechanism is in the disconnection state, the electric motor, of which the clutch mechanism is in the disconnection state, rotates for a prescribed period. Therefore, the clutch mechanism in the disconnection state can be certainly and automatically connected.

In the invention according to claim 2, in case that either the right or left (for example, right) clutch mechanism becomes the connection state when the electric motor is rotated for a prescribed period, rotation of the electric motor, on which the connection state is detected in the clutch mechanism, is stopped until the clutch mechanism on the opposite side (for example, left) becomes the connection state. Therefore, spinning of the vehicle can be prevented.

That is, if the electric motors rotate with only one of the clutches connected, only the wheel, of which the clutch is connected, rotates and the vehicle spins. In such a case, in the present invention, spinning of the vehicle can be prevented since the electric motor, of which the clutch is connected, is temporarily stopped.

In the invention according to claim 3, in case that both the right and left clutch mechanisms become the connection state when the electric motor, of which the clutch mechanism is in the disconnection state, is rotated for a prescribed period, output rotation command values to the right and left electric motors are temporarily returned to zero without depending on an input rotation command value from the inputting means. Therefore, a shock due to a rotational speed difference between the right and left motors can be prevented or reduced.

That is, a case that the left clutch is disconnected and the right clutch is connected will be considered, for example. The left electric motor is in a rotating state because of the rotation for the prescribed period. However, the right electric motor is in a stop state. If the same output rotation command values are given to the left and right electric motors in case that both the clutches are connected, the left electric motor is in a rotating state and thus immediately reaches a rotational speed corresponding to the output rotation command value. However, the right electric motor starts rotation from the stop state, and thus requires time to reach a rotational speed corresponding to the output rotation command value. This results in a difference between the rotational speeds of both the electric motors. This speed difference causes a shock. However, in the present invention, since output rotation command values are temporarily set to zero, the shock can be prevented or reduced.

In the invention according to claim 4, output rotation command values to the electric motors are temporarily returned to zero, and thereafter gradually changed so that they correspond to an input rotation command value from the inputting means. Accordingly, a smooth start of traveling without a shock can be realized.

In the invention according to claim 5, the warning by sound, display and so forth is output in case that either of the clutch mechanisms does not become the connection state when the electric motor, of which the clutch mechanism is in the disconnection state, is rotated for a prescribed period. Therefore, a driver can be noticed that the vehicle cannot travel due to disconnection of the clutch.

### Brief Description of the Drawings

FIG. 1 is a left side view of an electrically operated wheelchair according to an embodiment of the present invention.
FIG. 2 is a rear view of a right traveling wheel of the wheelchair.
FIG. 3 is a cross-sectional rear view of parts in a hub of the right traveling wheel.
FIG. 4 is a cross-sectional view taken along a line IV-IV in FIG. 3.
FIG. 5 is an explanatory view of operation of a clutch of the wheelchair.
FIG. 6 is a transition diagram of clutch states of the traveling control device.
FIG. 7 is a flowchart for describing control operation of the traveling control device.
FIG. 8 is a flowchart for describing control operation of the traveling control device.
FIG. 9 is a flowchart for describing control operation of the traveling control device.
FIG. 10 is a flowchart for describing control operation of the traveling control device.
FIG. 11 is a block diagram of the traveling control device.

### Brief Description of Reference Numerals and Symbols

1: electrically operated wheelchair (electrically operated small vehicle)
4, 4: left, right traveling wheel
8a: joystick (inputting means)
9, 9: left, right electric motor
10: planetary gear mechanism (driving force transmission system)
11, 11: dog clutch (mechanical clutch mechanism)
12, 12: left or right clutch detection switch
13: controller (motor controlling means)

### Best Mode for Carrying out the Invention

An embodiment will be described hereinafter with reference to attached drawings.

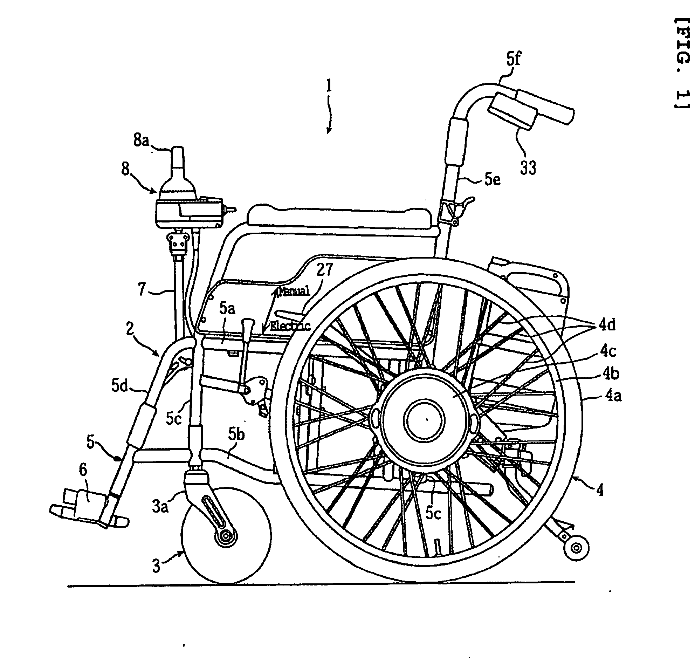

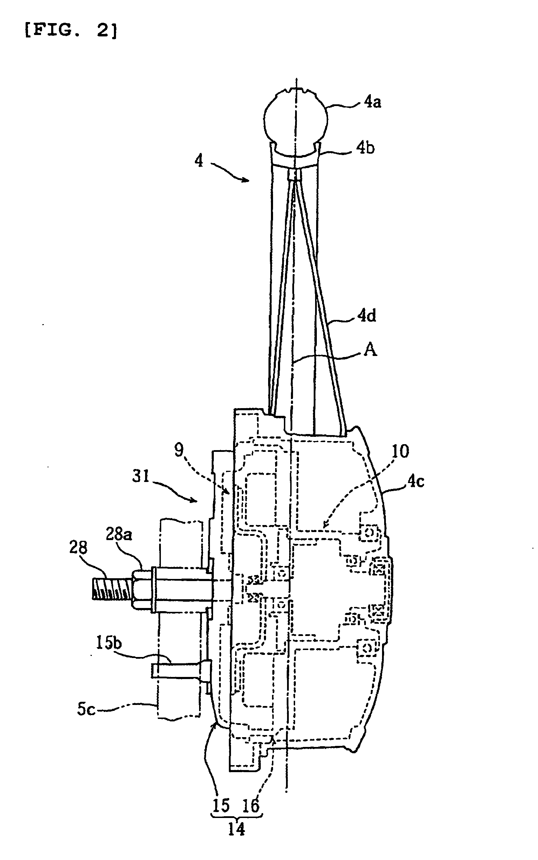

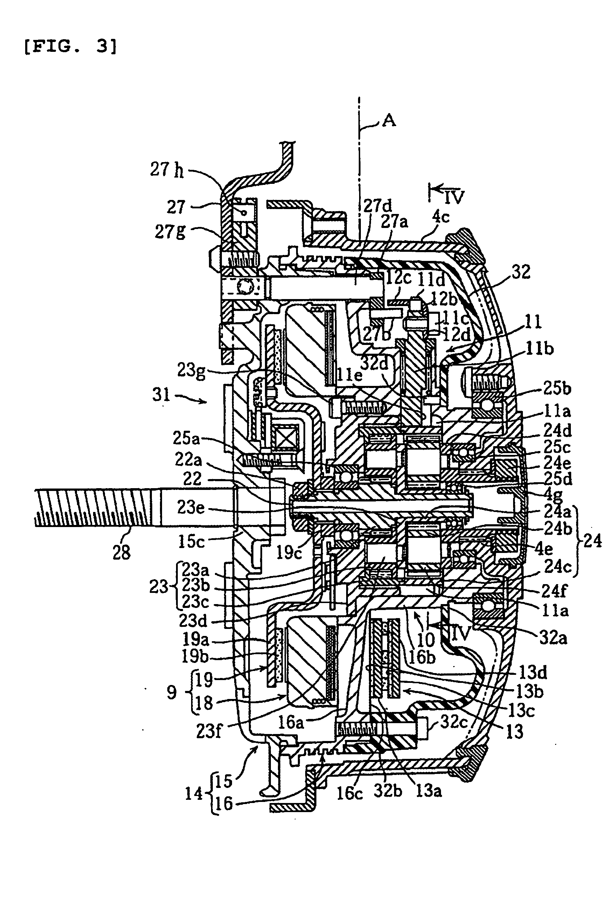

FIGs. 1 through 11 are drawings for describing the traveling control device for an electrically operated wheelchair according to an embodiment of the present invention. The front and rear and the right and left directions mean the front and rear and the right and left directions in the view of a driver sitting on the wheelchair.

In FIGs. 1 through 5 showing a construction of the wheelchair, a reference numeral 1 is an electrically operated wheelchair including the traveling control device according to this embodiment. The wheelchair 1 includes a vehicle body frame 2, right and left front wheels 3, 3 with a small diameter disposed in front parts of the vehicle body frame 2, and right and left traveling wheels 4, 4 with a large diameter disposed in rear parts. The vehicle body frame 2 has a general construction that right and left side frames 5, 5 are connected together by a plurality of cross frames. The side frame 5 has a general construction that upper and lower pipes 5a and 5b extending in the front and rear direction are connected together by a vertical pipe 5c. Board supporting pipes 5d are formed to extend downward at ends of the right and left side frames. Handlebar pipes 5e are formed to extend upward at rear ends of the right and left side frames. A stay 7 is disposed to stand upward at an end of the right side frame 5.

A footboard 6 is supported by the board supporting pipes 5d. A controller box 8, which a driver controls, is mounted on the stay 7. Steering handlebars 5f are mounted on the handlebar pipes 5e. An attendant controller box 33, which a helping attendant controls, is mounted on the handlebars 5f. Front wheel casters 3a are supported rotatably around the axes of the vertical pipes 5c by the vertical pipes 5c at the front ends. The front wheels 3 are rotatably supported by the front wheel holders 3a. The right and left traveling wheels 4, 4 are supported by the right and left vertical pipes 5c, 5c at the rear ends.

The right and left traveling wheels 4, 4 are symmetry over the vehicle center line, and basically have the same constructions. Each of the right and left traveling wheels 4, 4 has a construction that a ring-shaped rim 4b, on which a tire 4a is put, and a hub 4c in a cylindrical shape having a bottom plate are coupled together by a large number of spokes 4d. In this embodiment, lines (A) passing through the centers in the axial direction of the tire 4a and the rim 4b (the vehicle width direction) will be referred as "the width directional center lines" of the right and left traveling wheel 4, 4.

Power units 31, 31 for generating rotational driving force of the right and left traveling wheels 4, 4 are disposed in the hubs 4c. The right and left power units 31, 31 include right and left electric motors 9, 9, right and left planetary gear mechanisms 10, 10 functioning as driving force transmission systems for transmitting rotational driving force of the electric motors 9, 9 to the traveling wheels 4, 4, and right and left dog clutches 11, 11 functioning as the right and left mechanical clutch mechanisms for connecting or disconnecting the transmission of the driving force.

Also, in the hubs 4c, clutch detection switches 12, 12 functioning as the clutch detection means for detecting the connection or disconnection state of the dog clutches 11,11, and right and left motor drivers 13, 13 for communicating the connection or disconnection state of the dog clutches 11, 11 detected by the clutch detection switches to a remote controller 101 or an attendant controller 102 and for controlling rotations of the electric motors 9, 9 corresponding to output rotation commands from the controllers 101 and 102 are disposed.

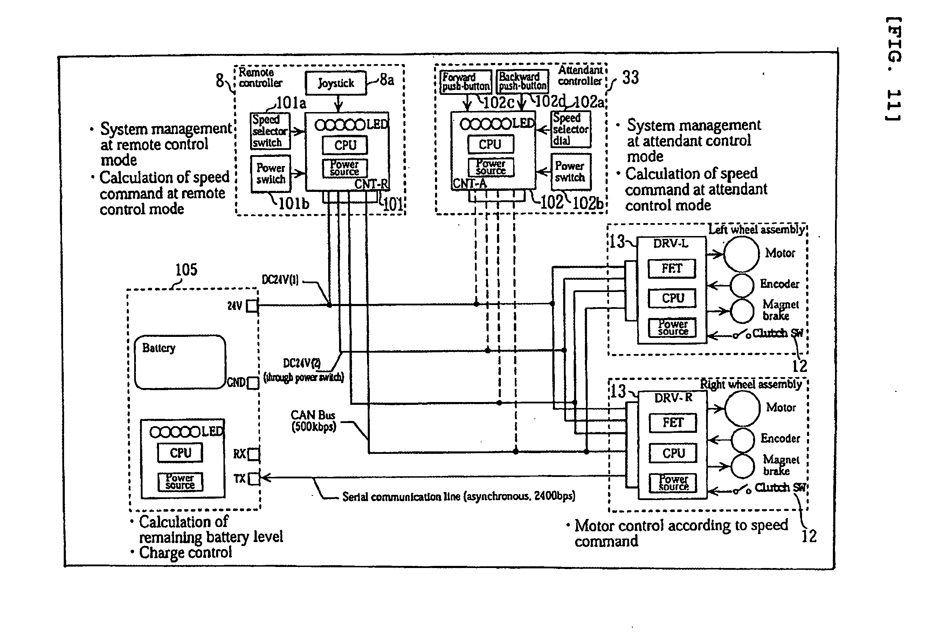

As shown in FIG. 11, a joystick 8a, the remote controller 101, a speed selector switch 101a, a power switch 101b, and so forth are provided in the controller box 8. The attendant controller 102, a speed selector dial 102a, a power switch 102b, a forward button 102c, a rearward button 102d, and so forth are provided in the attendant controlling box 33. The joystick 8a, the forward button 102c, the rearward button 102d function as the inputting means for providing an input rotation command value to the right and left electric motors 9, 9. The remote controller 101 and the attendant controller 102 calculate rotation command values provided to the electric motors 9, 9 based on the input rotation command value, and communicating commands to the motor drivers 13, 13.

Here, positions of the electric motors 9, 9 and so forth in the vehicle width direction will be more specifically described. The electric motors 9, 9 are disposed more inward in the vehicle width direction than the width directional center lines (A) of the traveling wheels 4, 4. At least a first and second speed reducing mechanisms 23 and 24 and control devices of the planetary gear mechanisms 10, 10 are disposed more outward in the vehicle width direction than the width directional center lines (A).

The electric motor 9 and the planetary gear mechanism 10 are housed in a hold casing 14. The hold casing 14 is separated into two parts in the motor axial direction, which are a generally dish-shaped motor casing 15 and a speed reducer casing 16 having a flange 16a and cylinder part 16b in a cylindrical shape with a bottom plate. An outer rim part of the motor casing 15 and an outer rim part of the flange 16a of the speed reducer casing 16 are combined together by a coupling bolt (not shown) in a disassemblable manner.

An attachment rod 28 is implanted to be positioned at the axis of the traveling wheel 4 in a central part 15c on an inside surface of the motor casing 15 in the vehicle width direction. The attachment rod 28 is inserted into a wheel supporting part fixed to the vertical pipe 5c at the rear end, which is not shown, and fixed thereto by a nut 28a. A stopper pin 15b is disposed in a member fitted on the motor casing 15. The vertical pipe 5c at the rear end of the vehicle body frame 2 is held between the stopper pin 15b and a cam member not shown. Thereby, the hold casing 14 and the power unit 31 are locked to the vehicle body frame 2 not to rotate.

The electric motors 9, 9 are disposed to be positioned close to the motor casings 15. The planetary gear mechanisms 10, 10 are disposed to be positioned close to the speed reducer casings 16. Each of the electric motors 9, 9 is a so-called axial gap type, in which a stator 18 faces a rotor 19 in the axial direction of the motor. The stator 18 is fixed to a part of the flange 16a of the speed reducer casing 16, which faces the motor casing 15. The rotor 19 includes a disc-shaped retaining plate 19a and a magnet 19b fixed to a part facing the stator 18 of the plate 19a. A central part 19c of the retaining plate 19a is spline-fitted on an input shaft 22 disposed at the axis of the electric motor 9, that is, the axis of the planetary gear mechanism 10, and fixed thereto by a holding nut 22a.

The motor driver 13 is fixed onto a rib 16c formed on a part of the flange 16a opposite to the motor. The motor driver 13 has a construction that an electronic circuit component 13d such as FET is installed on a substrate 13a fixed onto the rib 16c interposing a heat releasing sheet 13b between them, and the component 13d is covered by the heat releasing sheet 13b and a heat releasing plate 13c.

The planetary gear mechanism 10 is a two-speed reducing type constructed with the first and second speed reducing mechanisms 23 and 24 disposed on an input side and an output side. The first speed reducing mechanism 23 includes a first sun gear 23a formed around an outer periphery of the input shaft 22, a plurality of first planetary gears 23b engaging with the sun gear 23a, and a first ring gear 23c disposed to surround the planetary gears, in which inner teeth engage with the planetary gears 23b.

An outer peripheral surface of the first ring gear 23c is spline-fitted onto an inner local surface of a retaining member 23d fixed to a boundary between the cylinder part 16b and the flange 16a of the speed reducer casing 16 by bolting. The retaining member 23d pivotally supports an end of the input shaft 22 on the input side via a bearing 25a. An end of the input shaft 22 on the output side is supported by an inner periphery surface of a second carrier 24d described below via a bearing 25d.

The second speed reducing mechanism 24 includes a second sun gear 24a formed around an outer periphery of a shaft part of a first carrier 23e for supporting the first planetary gear 23b, a plurality of second planetary gears 24b engaging therewith, and a second ring gear 24c disposed to engage with the planetary gears 24b. An inner peripheral surface of an axial part 4e of the hub 4c is spline-fitted on an outer peripheral surface of a shaft part of the second carrier 24d for pivotally supporting the second planetary gears 24b. When the second carrier 24d rotates, the hub 4c, that is, the traveling wheel 4 is driven to rotate.

The second ring gear 24c is rotatably supported by an inner peripheral surface of the cylinder part 16b of the speed reducer casing 16. If the second ring gear 24c is locked to the speed reducer casing 16 and the vehicle body frame 2, rotations of the electric motor 9 is decelerated at a prescribed speed reducing ratio corresponding to a reduction gear ratio between the first and second speed reducing mechanisms 23 and 24, and transmitted to the traveling wheel 4. Thereby, electrically operated traveling can be made. On the other hand, if the lock is released, rotations of the electric motor 9 are not transmitted, and the traveling wheels 4, 4 are smoothly rotated without a resistance from the motor. Thereby, manual traveling can be made by a pushing force of a helping attendant. In this embodiment, the dog clutches 11, 11, which function as the clutch mechanism between the second ring gears 24c and the cylinder parts 16b, are constructed with utilizing this effect.

In the right side dog clutch 11, a stopper pin 11b reciprocally disposed on the vehicle body side is engaged in and out from grooves 11a formed on an outer peripheral surface of the second ring gear 24c at every prescribed angular interval (for example, 30°), and thereby rotation of the second ring gear 24c is disabled or enabled.

The stopper pin 11b is reciprocally guided by a cylindrical guide boss 16d projected outward in the radial direction from the cylinder part 16b of the speed reducer casing 16. The stopper pin 11b is urged by an urging spring 26 disposed between itself and a lid member 16e in a direction, in which it is engaged in (interlocked with) a groove 11a. A guide groove 11e is provided to extend in the axial direction on an outer surface of the stopper pin 11b. A guide pin 32d to lock the stopper pin 11b not to rotate is inserted in the guide groove 11e. The guide pin 32d is provided to protrude on the speed reducer casing 16.

A shoe plate 12b constructing a part of the clutch detection switch 12 is fixed to an upper part of the stopper pin 11b by a bolt 11c. The shoe plate 12b is formed with a plate bent into a shape having a horizontal section 12c and a vertical section 12d, of which the cross section is an L shape. An upper part 11d of the stopper pin 11b is fitted in the horizontal section 12c, and fixed thereto by the bolt 11c. Thereby, the shoe plate 12b is united with the stopper pin 11b.

A transmission plate 27a is disposed on an inner side of the shoe plate 12b in the vehicle width direction. A pair of locking pins 27b and 27c is implanted in the transmission plate 27a. Either of the locking pins contact with a lower surface of the horizontal section 12c of the shoe plate 12b depending on an angular state of the transmission plate 27a. Thereby, the stopper pin 11b is raised, or allowed to move downward.

The transmission plate 27a is fixed to an outer end of a clutch shaft 27d pivotally supported in an upper part of the hold casing 14 in the vehicle width direction. An inner end of the clutch shaft 27d in the vehicle width direction protrudes inward in the vehicle width direction from the hold casing 14. A clutch lever 27 is coupled with the protruding part via an arm 27g. The clutch lever 27 extends forward. If the clutch lever 27 is pivoted, the locking pins 27b and 27c contact with the horizontal section 12c of the shoe plate 12b.

The clutch lever 27 is provided only to the right traveling wheel 4. Only the arm 27g is provided to the clutch shaft 27d of the left traveling wheel 4. The right and left arms 27g, 27g are coupled together by a transmission cable 27h. If the clutch lever 27 on the right side is operated to rotate, both the right and left clutch shafts 27d rotate. In FIG. 1, although the clutch lever 27 is drawn behind the left traveling wheel 4, it shows the clutch lever 27 of the right traveling wheel 4.

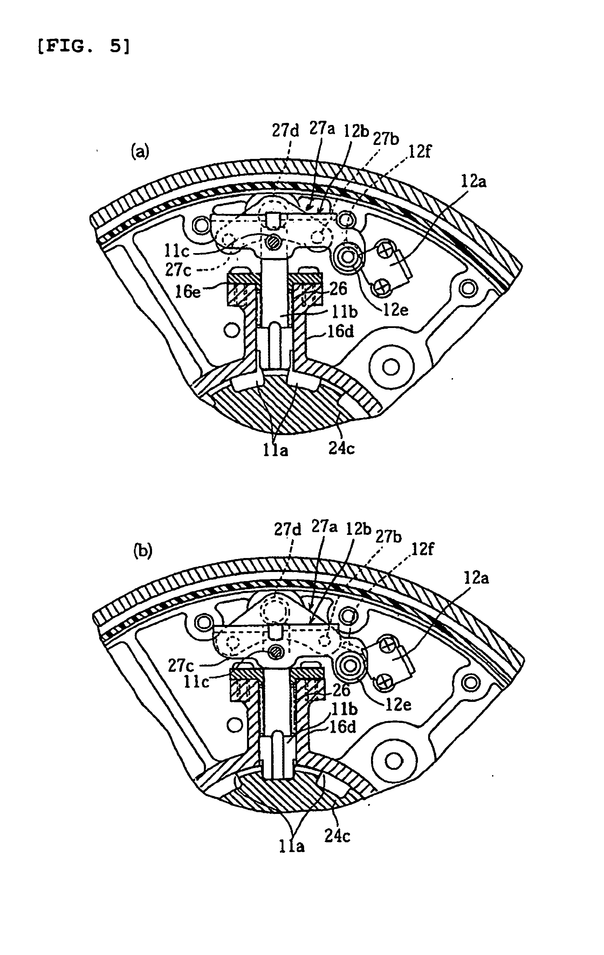

The clutch detection switch 12 includes a switch main body 12a fixed to the speed reducer casing 16, and the shoe plate 12b, which is fixed to the stopper pin 11b and moves up or down together with the pin 11b. A shoe 12e is mounted on an end of the shoe plate 12b. The shoe 12e rotates an actuation element 12f of the switch main body 12a. The actuation element 12f is urged into the position in FIG. 5(b). The switch main body 12a is turned on in the position. If the shoe 12e rises, the actuation element 12f is rotated to the position in FIG. 5(a), and the switch main body 12a is turned off.

The part of the speed reducer casing 16 on the side opposite to the motor is covered by a cover 32 formed into a ring shape with resin. An inner rim 32a of the cover 32 is fitted to an outer peripheral surface of the cylinder part 16b of the speed reducer casing 16, and an outer rim 32b is fixed to the flange 16a by a bolt 32c. The motor driver 13 and the dog clutch 11 are disposed in a space formed with the cover 32 and the speed reducer casing 16.

If the stopper pin 11b engages in the groove 11a, the shoe plate 12b moves down together with the shoe 12e and the actuation element 12f rotates downward with the downward motion. Thereby, the switch main body 12a is turned on. On the other hand, if the engagement between the pin 11b and the groove 11a is released, the shoe plate 12b rises together with the shoe 12e, and the actuation element 12f is rotated upward with the rise. Thereby, the switch main body 12a is turned off.

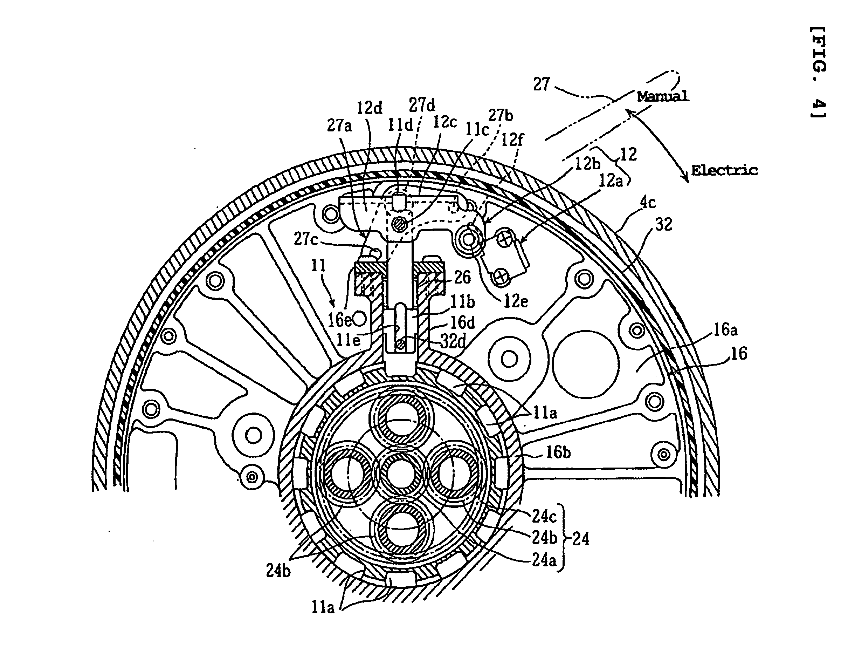

If the clutch lever 27 is pivoted to the manual position, the transmission plate 27a rotates counter-clockwise in FIG. 4, and the locking pin 27b raises the shoe plate 12b. Thereby, the engagement between the stopper pin 11b and the groove 11a of the second ring gear 24c is released, and the dog clutch 11 becomes the disconnection state (see FIG. 4). At this point, the shoe 12e of the shoe plate 12b rotates the actuation element 12f of the switch main body 12a clockwise in the figure, and thereby a turning-off signal is output from the switch main body 12a. Since the second ring gears 24c become rotatable, resistance to rotation in the traveling wheels 4 due to the power units 31 decreases, and thereby a helping attendant can smoothly push or pull the wheelchair 1.

On the other hand, in case that the stopper pin 11b is positioned between the groove 11a and the adjoining groove 11a of the second ring gear 24c as shown in FIG. 5 (a) when the clutch lever is pivoted down to the electric operation position, the stopper pin 11b cannot move down, and thus the clutch retains the disconnection state. In this case, if the ring gear 24c is slightly rotated, the stopper pin 11b engages in the groove 11a because of an urging force of the urging spring 26 as shown in FIG. 5(b). Thereby, the shoe plate 12b moves down. The shoe 12e is separated from the actuation element 12f, and the actuation element 12f rotates counter-clockwise in the figure. Accordingly, a turning-on signal is output from the switch main body 12a.

The remote controller 101 or the attendant controller 102 controls rotations of the right and left electric motors 9, 9 in the following manner. First, for example, in case that a driver controls the joystick 8a and thereby an input rotation command value is input when the right dog clutch 11 is in the disconnection state, that is, when the stopper pin 11b has not engaged in the groove 11a, the right electric motor 9 in the disconnection state is rotated for a prescribed period, specifically, a period that the second ring gear 24c rotates for an angular pitch of the grooves 11a formed thereon, for example. Thereby, the stopper pin 11b certainly engages in the groove 11a. Accordingly, the right and left dog clutches 11, 11 can be automatically, facilely, and certainly connected. In case that both the right and left dog clutches are in the disconnection states, both the right and left electric motors are rotated for a prescribed period.

In case that either of the right and left dog clutches 11 (for example, right) becomes the connection state when either one of or both the right and left motors in the disconnection state are rotated for a prescribed period, motor rotation of the right electric motor 9 is stopped until the dog clutch 11 on the opposite side (for example, left) becomes the connection state.

Further, in case that both the dog clutches 11, 11 become the connection state when the right electric motor 9 is rotated for a prescribed period, output rotation command values to the electric motors 9 are returned to zero without depending on a rotation command value from the joystick 8a. After the output rotation command values are temporarily returned to zero, the output rotation command values are gradually changed so that they correspond to an input rotation command value from the joystick 8a.

In case that either of the right and left dog clutches 11, 11 does not become the connection state when the right electric motor 9 in the disconnection state is rotated for a prescribed period, warning means is actuated, and a warning such as sound and display are output.

FIG. 11 is a block diagram of the control device according to this embodiment. In the figure, the reference numeral 101 denotes the remote controller for controlling rotation of the traveling wheels based on control by a driver. If an input rotation command value by operation of the joystick 8a by a driver, a speed signal from a speed selector switch 101a for selecting a speed of a requested gear position, and so forth are input, the remote controller 101 outputs motor rotation control signals corresponding to those signals to the motor drivers 13, 13 of the right and left traveling wheels.

The reference numeral 102 denotes the attendant controller for operating rotations of the traveling wheels based on control by a helping attendant. If a forward or rearward signal by operation of the forward or rearward button 102c or 102d by a helping attendant, a speed signal from the speed selector dial 102a for selecting any speed among a plurality of gear positions, and so forth are input, the attendant controller 102 outputs motor rotation control signals corresponding to those signals to the motor drivers 13, 13 of the right and left traveling wheels. A reference numeral 105 denotes a battery management controller for controlling conditions of a battery.

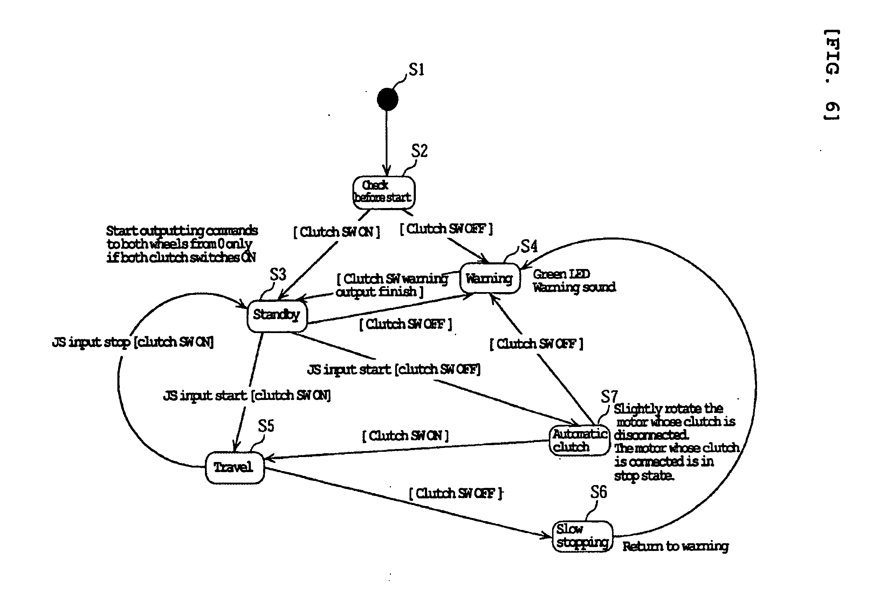

Next, state transitions of the clutch mechanism of the control device according to this embodiment will be described with reference to FIG. 6. Controlling is made with only either one of the remote controller 101 and the attendant controller 102, but both the controllers cannot be used at the same time. Inputs by the forward and rearward buttons 102c and 102d, and also the speed selector dial 102a of the attendant controller 102 are equivalent to inputs by the joystick 8a of the remote controller 101. Therefore, descriptions will be made about cases of the remote controller 101 in the following.

If the power source is turned on (S1), a check before a start is made (S2). If the clutch detection switches 12, 12 detect the connection states of both the right and left clutches, the remote controller 101 becomes a standby mode (S3). On the other hand, if the disconnection state is detected in either of or both the right and left clutches, a process goes to a warning mode, in which a warning is made with lighting of a green LED and a warning sound (S4). When the warning finishes, the process goes to the standby mode (S3).

If an input from the joystick 8a starts, and both the clutch detection switches 12, 12 detect the connection states at the standby mode (S3), the process goes to a traveling mode (S5). If the clutch detection switches 12, 12 detect the connection states, and inputs from the joystick stop, the process goes to the standby mode. If the clutch detection switches 12, 12 detect the disconnection state, the process goes to a slow stopping mode (S6), and returns to the warning mode.

On the other hand, if an input from the joystick starts, and the clutch detection switches detect the disconnection state, the process goes to an automatic clutch mode (S7), in which the motor, of which the clutch is in the disconnection state, is rotated for a prescribed period, and the motor, of which the clutch is in the connection state, stops. If the clutch detection switch detects the connection state because of rotation of the motor, of which the clutch was in the disconnection state, the process goes to the traveling mode (S5). If the disconnection state is detected, the process goes to the warning mode (S4).

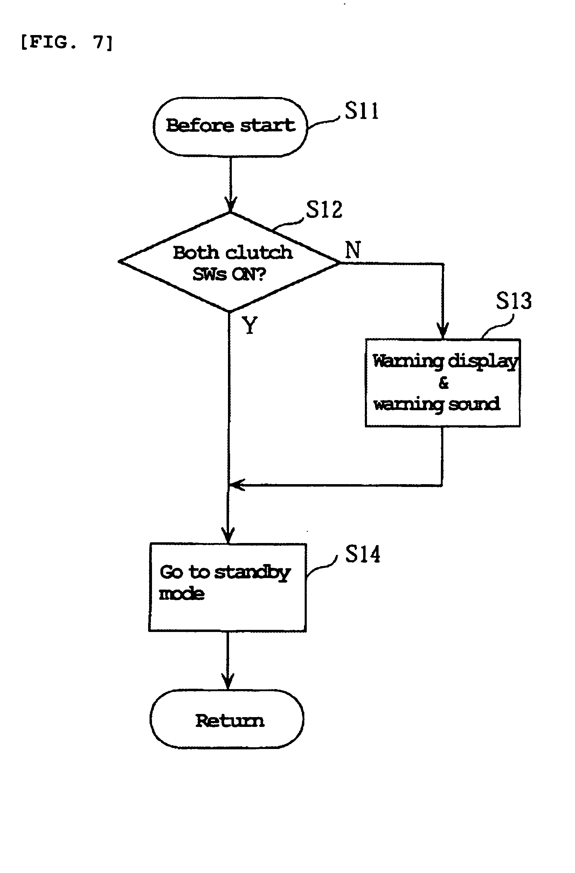

Control operation at each of the modes will be more specifically described with reference to flowcharts in FIGs. 7 through 10.

As shown in FIG. 7, at the check before a start, determination about connection states of the right and left dog clutches. In case that the disconnection state is detected in either one of or both the right and left clutch detection switches 12, 12, the warning with display and sound is made (S11 through S13). In case that both the clutch detection switches 12, 12 detect the connection states, the process goes to the standby mode (S14).

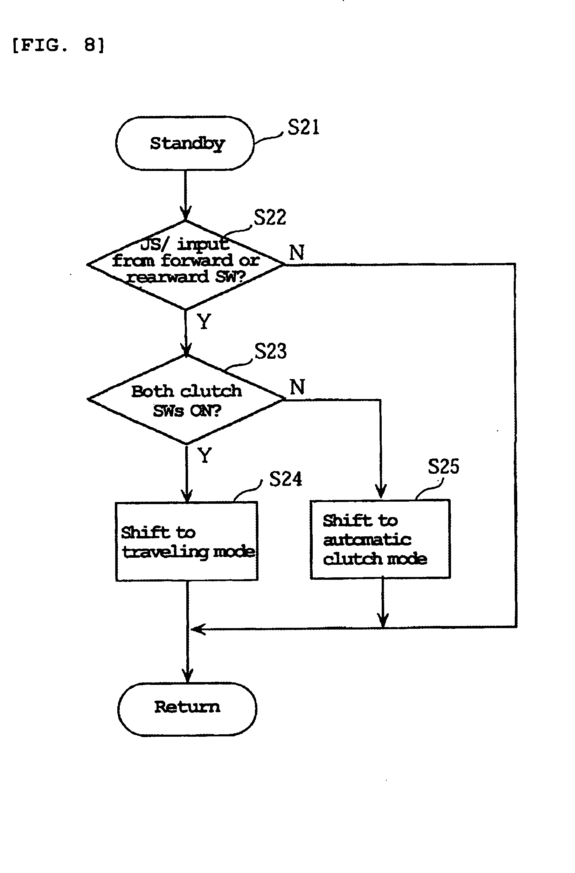

As shown in FIG. 8, at the standby mode, in case that an input from the joystick 8a, or the forward or rearward switch is made (S21, S22) and both the clutch detection switches detect the connection states (S23), the process goes to the traveling mode (S24). On the other hand, in case that the disconnection state is detected in either one of or both the clutch detection switches 12, 12, the process goes to the automatic clutch mode (S25).

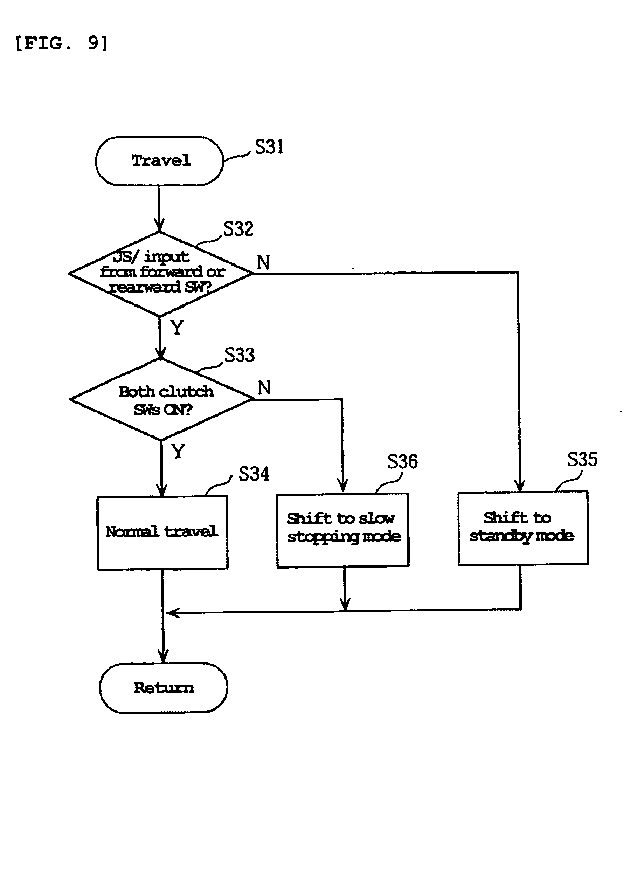

As shown in FIG. 9, at the traveling mode, in case that an input is made from the joystick 8a, or the forward or rearward switch, and both the clutch detection switch 12, 12 detect the connection states, normal traveling is made (S31 through S34). In case that there is no input in the S32, the process goes to the standby mode (S35). In case that the disconnection state is detected in either one of or both the clutch detection switches in the S33, the process goes to the slow stopping mode (S36).

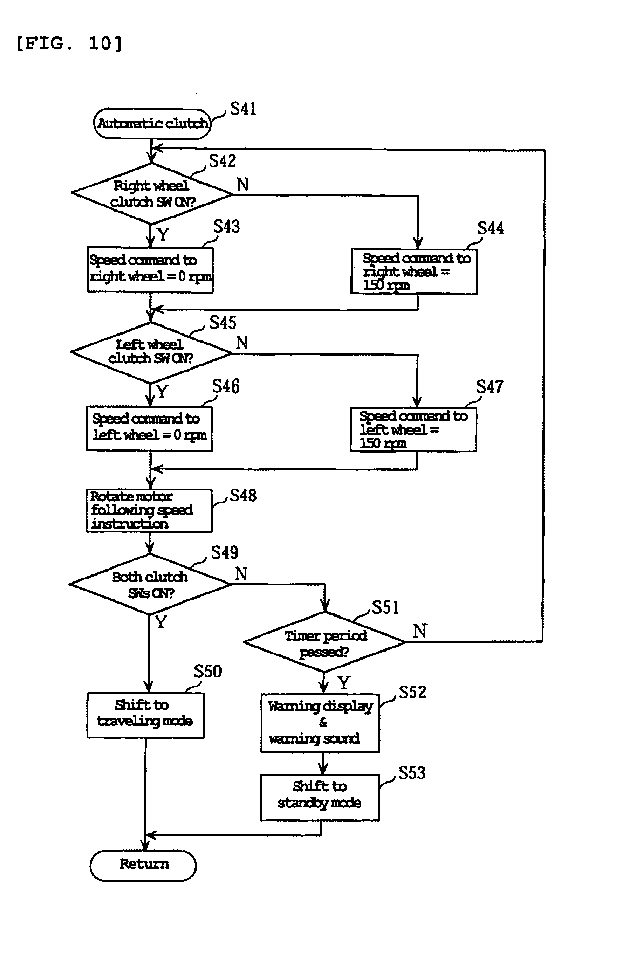

As shown in FIG. 10, at the automatic clutch mode, in case that the clutch detection switch of the right wheel detects the connection state, an output rotation command value to the right wheel is set to 0 rpm first (S42, S43). In case that the disconnection state is detected, an output rotation command value is set to 150 rpm (S42, S44). In case that the clutch detection switch of the left wheel detects the connection state, an output rotation command value is set to 0 rpm (S45, S46). In case that the disconnection state is detected, an output rotation command value is set to 150 rpm (S45, S47).

Thereafter, the right and left electric motors rotate following the set output rotation command values (S48). If the connection states of both the right and left clutches are detected, the process goes to the traveling mode (S49, S50). On the other hand, in case that the connection state is not detected either the right or left clutch, the operation of the S42 through S49 is repeated until a preset period passes. If the preset period has passed, the warning with display and sound is made, and the process goes to the standby mode (S51 through 53).

As the foregoing, in this embodiment, a driver provides an input rotation command value by controlling the joystick 8a. Thereafter, the clutch detection switches 12 detect the connection state or the disconnection state of the dog clutches 11. Output rotation command values to the electric motors 9 are controlled corresponding to the connection state or the disconnection state of the dog clutches 11. As a result, the dog clutches 11 automatically, facilely, and certainly becomes the connection states.

Specifically, for example, in case that an input rotation command value is input from the joystick 8a when the right dog clutch 11 is in the disconnection state (see FIG. 5(a)), the right electric motor 9 in the disconnection state rotates for a prescribed period. Thereby, the pin 11b of the dog clutch automatically engages in the groove 11a (see FIG. 5(b)). As a result, the clutch mechanism in the disconnection state can be certainly and automatically connected.

In case that the disconnection state is detected in either one of or both the right and left clutches, the electric motor 9, of which the clutch is in the disconnection state, is rotated for a prescribed period, and that either the right or left dog clutch 11 (for example, right) becomes the connection state, rotation of the right electric motor 9, on which the connection state is detected, is stopped until the dog clutch 11 on the opposite side (for example, left) becomes the connection state. Therefore, the wheelchair 1 can be prevented from spinning in the position where it is.

That is, for example, if the electric motors 9, 9 rotate with only the right clutch 11 being connected, only the wheel 4, of which the clutch is connected, rotates, and the vehicle spins. In this embodiment, the electric motor 9, of which the clutch is connected, temporarily stops its rotation in such a case. Therefore, spinning of the vehicle can be prevented.

In this embodiment, in case that both the right and left clutches become the connection states when the electric motor, of which the clutch is in the disconnection state, is rotated for a prescribed period, output rotation command values to the right and left electric motors are temporarily returned to zero without depending on an input rotation command value. Therefore, a shock due to a difference between the rotational speeds of the right and left motors can be prevented or reduced.

That is, the case that the left dog clutch 11 is disconnected and the right dog clutch 11 is connected will be considered, for example. In this case, although the left electric motor 9 is in a rotating state due to the rotation for the prescribed period, the right electric motor 9 is in a stop state. If both the clutches become the connection states in such a state and the same output rotation command values are provided to both the right and left motors, the left electric motor 9 immediately reaches a rotational speed corresponding to the output rotation command value since it is in the rotating state. However, the right electric motor 9 requires time to reach a rotational speed corresponding to the output rotation command value since it starts rotation from the stop state. Therefore, it results in a difference between rotational speeds of both the electric motors. The speed difference causes a shock. However, in this embodiment, output rotation command values are temporarily set to zero, and thus the shock can be prevented or reduced.

Further, output rotation command values to the electric motors are temporarily returned to zero, and thereafter gradually increased so that they correspond to an input rotation command value. Therefore, a smooth start of traveling without a shock can be realized.

In case that either of the right and left clutches does not become the connection state when the electric motor, of which the clutch is in the disconnection state, is rotated for a prescribed period, the warning such as sound and display is output. Therefore, a driver can be noticed that the vehicle cannot travel since the clutch is not connected.

In the above embodiment, descriptions are made about a case of a wheelchair, as an example. However, the present invention can be applied to electrically operated small vehicle other than wheelchairs.

In the above embodiment, descriptions are made about a case that the clutch lever 27 is provided only to the right traveling wheel, the arm 27g of the right clutch shaft 27d and the arm 27g of the left clutch shaft 27d are coupled by a coupling cable 27h, and thereby the right and left clutches are linked. However, in the present invention, the clutch mechanisms can be right and left independent clutches, in which clutch levers are provided to both the right and left clutch shafts. In such a case, a cable for coupling the right and left clutch levers together is not necessary. Therefore, for example, a problem that the coupling cable disturbs demounting of the right and left traveling wheels can be prevented.

## Claims

1. Electrically operated small vehicle (1), in particular an electrically operated wheelchair (1), comprising:
a pair of right and left traveling wheels (4, 4);
right and left electric motors (9, 9) configured to generate driving force for the respective traveling wheels(4, 4);
a driving force transmission system (10) configured to transmit driving force from the right and left electric motors (9, 9) to the right and left traveling wheels(4, 4);
right and left dog clutch mechanisms (11, 11) provided between the driving force transmission system (10) and configured to connect or disconnect the transmission of the driving force; and
a traveling control device, said traveling control device comprising:
an inputting means (8a) configured to provide an input rotation command value to the right and left electric motors (9, 9),
a clutch state detecting means (12, 12) configured to detect a connection or disconnection state of the right and left dog clutch mechanisms (11, 11), and
a motor controlling means (13) configured to control an output rotation command value to the right and left electric motors (9, 9) corresponding to the connection or disconnection state of the right and left dog clutch mechanisms (11, 11) as detected by the clutch state detecting means (12, 12),
**characterized in that**
the motor controlling means (13) is configured to rotate the electric motor (9), of which the dog clutch mechanism (11) is in the disconnection state, for a prescribed period in case that an input rotation command value is input from the inputting means (8a) when either one of or both the right and left dog clutch mechanisms (11, 11) are in the disconnection state.

2. Vehicle according to claim 1, wherein, in case that either the right or left dog clutch mechanism (11, 11) becomes the connection state when the electric motor (9), of which the dog clutch mechanism (11) is in the disconnection state, is rotated for a prescribed period, the motor controlling means (13) stops rotation of the electric motor (9), on which the connection state is detected in its dog clutch mechanism (11), until the dog clutch mechanism (11) on the opposite side becomes the connection state.

3. Vehicle according to claim 2, wherein, in case that both the right and left dog clutch mechanisms (11, 11) become the connection state when the electric motor (9), of which the dog clutch mechanism (11) is in the disconnection state, is rotated for a prescribed period, the motor controlling means (13) temporarily returns output rotation command values to the electric motors (9, 9) to zero without depending on an input rotation command value from the inputting means (8a).

4. Vehicle according to claim 3, wherein the motor controlling means (13) gradually changes output rotation command values so that they correspond to an input rotation command value from the inputting means (8a) after returning the output rotation command values to the electric motors (9, 9) to zero.

5. Vehicle according to one of claims 1 to 4, wherein the motor controlling means (13) includes warning means for outputting a warning such as sound and display in case that either the right or left dog clutch mechanism (11, 11) does not become the connection state when the electric motor (9), of which the dog clutch mechanism (11) is in the disconnection state, is rotated for a prescribed period.

6. Method for controlling an electrically operated small vehicle (1), in particular an electrically operated wheelchair (1), comprising a pair of right and left traveling wheels (4, 4), right and left electric motors (9, 9) for generating driving force for the respective traveling wheels (4, 4), a driving force transmission system (10) for transmitting driving force from the right and left electric motors (9, 9) to the right and left traveling wheels (4, 4), and right and left dog clutch mechanisms (11, 11) provided between the driving force transmission system (10), the method comprising the steps of:
• determining an input rotation command value to the right and left electric motors (9, 9),
• detecting a connection state or a disconnection state of the right and left dog clutch mechanisms (11, 11),
• controlling an output rotation command value to the right and left electric motors (9, 9) corresponding to the connection or disconnection state of the right and left dog clutch mechanisms (11, 11), and
• rotating the electric motor (9), of which the dog clutch mechanism (11) is in the disconnection state, for a prescribed period when either one of or both the right and left dog clutch mechanisms (11, 11) are in the disconnection state.

## Patentansprüche

1. Elektrisch angetriebenes Kleinfahrzeug (1) wie insbesondere ein elektrisch angetriebener Rollstuhl (1), umfassend:
ein Paar von rechten und linken Fortbewegungsrädern (4, 4),
rechte und linke Elektromotoren (9, 9), die konfiguriert sind zum Erzeugen einer Antriebskraft für die entsprechenden Fortbewegungsräder (4, 4),
ein Antriebskraftübertragungssystem (10), das konfiguriert ist zum Übertragen der Antriebskraft von den rechten und linken Elektromotoren (9, 9) zu den rechten und linken Fortbewegungsrädern (4, 4),
rechte und linke Klauenkupplungsmechanismen (11, 11), die zwischen dem Antriebskraftübertragungssystem (10) vorgesehen sind und konfiguriert sind zum Verbinden oder Trennen der Übertragung der Antriebskraft, und
eine Fortbewegungssteuereinrichtung, wobei die Fortbewegungssteuereinrichtung umfasst:
eine Eingabeeinrichtung (8a), die konfiguriert ist zum Vorsehen eines Eingabe-Drehbefehlswerts zu den linken und rechten Elektromotoren (9, 9),
eine Kupplungszustands-Erfassungseinrichtung (12, 12), die konfiguriert ist zum Erfassen eines Verbindungs- oder Trennzustands der rechten und linken Klauenkupplungsmechanismen (11, 11), und
eine Motorsteuereinrichtung (13), die konfiguriert ist zum Steuern eines Ausgabe-Drehbefehlswerts zu den rechten und linken Elektromotoren (9, 9) in Entsprechung zu dem durch die Kupplungszustands-Erfassungseinrichtung (12, 12) erfassten Verbindungs- oder
Trennzustand der rechten und linken Klauenkupplungsmechanismen (11, 11),
**dadurch gekennzeichnet, dass**
die Motorsteuereinrichtung (13) konfiguriert ist zum Drehen des Elektromotors (9), dessen Klauenkupplungsmechanismus (11) sich im Trennzustand befindet, für eine vorgeschriebene Periode, falls ein Eingabe-Drehbefehlswert von der Eingabeeinrichtung (8a) eingegeben wird, während sich der rechte und/oder der linke Klauenkupplungsmechanismus (11, 11) in dem Trennzustand befinden.

2. Fahrzeug nach Anspruch 1, wobei, falls der rechte oder linke Klauenkupplungsmechanismus (11, 11) zu dem Verbindungszustand übergeht, während der Elektromotor (9), dessen Klauenkupplungsmechanismus (11) sich in dem Trennzustand befindet, für eine vorgeschriebene Periode gedreht wird, stoppt die Motorsteuereinrichtung (13) die Drehung des Elektromotors (9), an dem der Verbindungszustand des Klauenkupplungsmechanismus (11) erfasst wird, bis der Klauenkupplungsmechanismus (11) auf der gegenüberliegenden Seite zu dem Verbindungszustand übergeht.

3. Fahrzeug nach Anspruch 2, wobei, falls die rechten und linken Klauenkupplungsmechanismen (11, 11) zu dem Trennzustand übergehen, während der Elektromotor (9), dessen Klauenkupplungsmechanismus (11) sich in dem Trennzustand befindet, für eine vorgeschriebene Periode gedreht wird, setzt die Motorsteuereinrichtung (13) vorübergehend Ausgabe-Drehbefehlswerte zu den Elektromotoren (9, 9) zurück zu null, ohne Rücksicht auf einen Eingabe-Drehbefehlswert von der Eingabeeinrichtung (8a).

4. Fahrzeug nach Anspruch 3, wobei die Motorsteuereinrichtung (13) allmählich die Ausgabe-Drehbefehlswerte derart ändert, dass diese einem Eingabe-Drehbefehlswert von der Eingabeeinrichtung (8a) entsprechen, nachdem die Ausgabe-Drehbefehlswerte zu den Elektromotoren (9, 9) auf null zurückgesetzt wurden.

5. Fahrzeug nach einem der Ansprüche 1 bis 4, wobei die Motorsteuereinrichtung (13) eine Warneinrichtung umfasst, um eine Warnung wie etwa einen Klang oder eine Anzeige auszugeben, falls der rechte oder linke Klauenkupplungsmechanismus (11, 11) nicht zu dem Verbindungszustand übergeht, während der Elektromotor (9), dessen Klauenkupplungsmechanismus (11) sich in dem Trennzustand befindet, für eine vorgeschriebene Periode gedreht wird.

6. Verfahren zum Steuern eines elektrisch angetriebenen Kleinfahrzeugs (1) wie insbesondere eines elektrisch angetriebenen Rollstuhls (1), der ein Paar von rechten und linken Fortbewegungsrädern (4, 4), rechte und linke Elektromotoren (9, 9) zum Erzeugen einer Antriebskraft für die entsprechenden Fortbewegungsräder (4, 4), ein Antriebskraftübertragungssystem (10) zum Übertragen der Antriebskraft von den rechten und linken Elektromotoren (9, 9) zu den rechten und linken Fortbewegungsrädern (4, 4), und rechte und linke Klauenkupplungsmechanismen (11, 11), die zwischen dem Antriebskraftübertragungssystem (10) vorgesehen sind, umfasst, wobei das Verfahren die folgenden Schritte umfasst:
• Bestimmen eines Eingabe-Drehbefehlswerts zu den rechten und linken Elektromotoren (9, 9),
• Erfassen eines Verbindungs- oder Trennzustands der rechten und linken Klauenkupplungsmechanismen (11, 11),
• Steuern eines Ausgabe-Drehbefehlswerts zu den rechten und linken Elektromotoren (9, 9) in Entsprechung zu dem Verbindungs- oder Trennzustand der rechten und linken Klauenkupplungsmechanismen (11, 11), und
• Drehen des Elektromotors (9), dessen Klauenkupplungsmechanismus (11) sich in dem Trennzustand befindet, für eine vorgeschriebene Periode, wenn sich der rechte und/oder der linke Klauenkupplungsmechanismus (11, 11) in dem Trennzustand befinden.

## Revendications

1. Petit véhicule commandé électriquement (1) en particulier, fauteuil roulant commandé électriquement (1), comprenant :
une paire de roues de déplacement droite et gauche (4, 4) ;
des moteurs électriques droit et gauche (9, 9) configurés pour générer une force d'entraînement aux roues de déplacement respectives (4, 4) ;
un système de transmission de force d'entraînement (10) configuré pour transmettre une force d'entraînement des moteurs électriques droit et gauche (9, 9) aux roues de déplacement droite et gauche (4, 4) ;
des mécanismes d'embrayage à griffes droit et gauche (11, 11) prévus entre le système de transmission de force d'entraînement (10) et configurés pour brancher ou débrancher la transmission de la force d'entraînement ; et
un dispositif de contrôle de parcours, ledit dispositif de contrôle de parcours comprenant :
un moyen d'entrée (8a) configuré pour fournir une valeur de commande de rotation d'entrée aux moteurs électriques droit et gauche (9, 9),
un moyen de détection d'état d'embrayage (12, 12) configuré pour détecter l'état branché ou débranché des mécanismes d'embrayage à griffe droit et gauche (11, 11), et
un moyen de contrôle de moteur (13) configuré pour contrôler la valeur de commande de rotation de sortie aux moteurs électriques droit et gauche (9, 9) correspondant à l'état branché ou débranché des mécanismes d'embrayage à griffe droit et gauche (11, 11) détecté par le moyen de détection d'état d'embrayage (12, 12),
**caractérisé en ce que**
le moyen de contrôle de moteur (13) est configuré pour faire tourner le moteur électrique (9), dont le mécanisme d'embrayage à griffes (11) est dans l'état débranché, pendant une période prescrite dans le cas où une valeur de commande de rotation d'entrée est appliquée en entrée depuis le moyen d'entrée (8a) lorsque l'un ou l'autre ou les deux des mécanismes d'embrayage à griffe droit et gauche (11, 11) est(sont) dans l'état débranché.

2. Véhicule selon la revendication 1, dans lequel, dans le cas où l'un ou l'autre du mécanisme d'embrayage à griffe droite ou gauche (11, 11) passe dans l'état débranché lorsque le moteur électrique (9) dont le mécanisme d'embrayage à griffe (11) est dans l'état débranché, est mis en rotation pendant une période prescrite, le moyen de contrôle de moteur (13) arrête la rotation du moteur électrique (9), sur lequel l'état branché est détecté dans son mécanisme d'embrayage à griffes (11) jusqu'à ce que le mécanisme d'embrayage à griffes (11) du côté opposé passe dans l'état branché.

3. Véhicule selon la revendication 2, dans lequel, dans le cas où les deux mécanismes d'embrayage à griffe droit et gauche (11, 11) passent dans l'état branché lorsque le moteur électrique (9), dont le mécanisme d'embrayage à griffe (11) est dans l'état débranché, est mis en rotation pendant une période prescrite, le moyen de contrôle de moteur (13) ramène temporairement à zéro les valeurs de commande de rotation de sortie des moteurs électriques (9, 9) sans dépendre de la valeur de commande de rotation d'entrée provenant du moyen d'entrée (8a).

4. Véhicule selon la revendication 3, dans lequel le moyen de contrôle de moteur (13) modifie progressivement les valeurs de commande de rotation de sortie de façon qu'elles correspondent à une valeur de commande de rotation d'entrée provenant du moyen d'entrée (8a) après avoir ramené à zéro les valeurs de commande de rotation de sortie des moteurs électriques (9, 9).

5. Véhicule selon l'une des revendications 1 à 4, dans lequel le moyen de contrôle de moteur (13) comporte un moyen d'avertissement pour fournir en sortie un avertissement tel qu'un son et un affichage dans le cas où l'un ou l'autre du mécanisme d'embrayage à griffes droit ou gauche (11, 11) ne passe pas dans l'état branché lorsque le moteur électrique (9) dont le mécanisme d'embrayage à griffe (11) est dans l'état débranché et mis en rotation pendant une période prescrite.

6. Procédé de contrôle d'un petit véhicule commandé électriquement (1) en particulier, un fauteuil roulant commandé électriquement (1), comprenant : une paire de roues de déplacement droite et gauche (4, 4), des moteurs électriques droit et gauche (9, 9) pour générer une force d'entraînement aux roues de déplacement respectives (4, 4), un système de transmission de force d'entraînement (10) pour transmettre une force d'entraînement des moteurs électriques droit et gauche (9, 9) aux roues de déplacement droite et gauche (4, 4), et des mécanismes d'embrayage à griffes droit et gauche (11, 11) prévus entre le système de transmission de force d'entraînement (10), le procédé comprenant les étapes consistant à :
déterminer la valeur de commande de rotation d'entrée des moteurs électriques droit et gauche (9, 9),
détecter l'état branché ou l'état débranché des mécanismes d'embrayage à griffe droit et gauche (11, 11),
contrôler la valeur de commande de rotation de sortie aux moteurs électriques droit et gauche (9, 9) correspondant à l'état branché ou débranché des mécanismes d'embrayage à griffe droit et gauche (11, 11), et
faire tourner le moteur électrique (9), dont le mécanisme d'embrayage à griffes (11) est dans l'état débranché, pendant une période prescrite lorsque l'un ou l'autre ou les deux des mécanismes d'embrayage à griffe droit et gauche (11, 11) est(sont) dans l'état débranché.
